# EUROPEAN PATENT SPECIFICATION

(11) **EP 3 910 754 B1**
(45) Date of publication and mention of the grant of the patent: **06.11.2024**
(21) Application number: 20173792.1
(22) Date of filing: 11.05.2020
(51) Int. Cl.: H05B 47/17, H05B 47/18, H02J 9/02, H05B 47/175

(54) **EMERGENCY LIGHTING DEVICE**
NOTBELEUCHTUNGSVORRICHTUNG
DISPOSITIF D'ÉCLAIRAGE D'URGENCE

(43) Date of publication of application: 17.11.2021
(73) Proprietor: Tridonic GmbH & Co. KG, 6851 Dornbirn (AT)
(72) Inventor: Dixon, David, 6850 Dornbirn (AT)
(74) Representative: Rupp, Christian

(56) References cited:
- EP-A1- 3 541 147
- EP-A2- 1 467 465
- US-A1- 2018 019 615

## Description

### TECHNICAL FIELD OF THE INVENTION

The invention relates to an emergency lighting device for supplying an emergency lighting means and to a method for operating such an emergency lighting device.

### BACKGROUND OF THE INVENTION

Emergency lighting systems enable a quick and safe evacuation of buildings in an emergency situation, for instance during a fire alarm. Such systems usually comprise a plurality of emergency luminaires and associated control gear, e.g. drivers, which are installed in different places in the building.

Typically, such emergency control gear comprises a test switch for initiating a test sequence of the gear. The test switch can be connected to a dedicated port on the gear. A driver for emergency lighting means comprising such a test switch is, for instance, disclosed in document DE 20 2016 007 323 U1.

The document EP 3 541 147 A1 discloses an emergency luminaire comprising a housing having a base body and a power management unit arranged in the base body and connected to an emergency power source. The emergency luminaire further comprises a first light source and a second light source with different lighting characteristics compared to the first light source. Furthermore, the power management unit comprises at least one controller programmable between several configurations, each configuration corresponding to a specific distribution of the energy provided by at least the emergency power source between the first and second light sources.

The document EP 1 467 465 A2 discloses a method and a device for secure emergency lighting of tunnels, preferably of railway tunnels in case of a danger, wherein all tunnel lights and devices are thereby monitored.

The document US 2018/0019615 A1 discloses an emergency operating arrangement for at least one building technical device comprising a power supply unit, and an emergency supply unit.

Often, the emergency control gear comprises further interfaces, for instance, for setting an operating mode of the gear or for exchanging communication data. This leads to a higher complexity of the gear and increases its overall cost.

Thus, it is an objective to provide an improved emergency lighting device and an improved method for operating an emergency lighting device. In particular, it is an object to provide an emergency lighting device that can receive different types of signals while having a low complexity and, thus, low production costs.

### SUMMARY OF THE INVENTION

The object of the present invention is achieved by the solution provided in the enclosed independent claims. Advantageous implementations of the present invention are further defined in the dependent claims.

According to a first aspect, the present disclosure relates to an emergency lighting device, comprising: output terminals for electrically supplying an emergency lighting means; a port for receiving communication signals, wherein a test switch is connectable to the port; wherein the port is configured to receive selective test start signals from the test switch and wherein the port is further configured to receive non-test start related communication signals from the test switch; and a controller configured to discriminate the communication signals received at the port in order to correspondingly process the received data as test start signal data or non-test start related communication signal data.

This achieves the advantage that the emergency lighting device can receive different types of signals via its test switch port. Thus, the complexity of the device can be reduced.

The emergency lighting device can be a driver for the emergency lighting means. The driver can be a converter or can comprise a converter of the emergency lighting means. In particular, the emergency lighting device can be designed for providing a DC power supply to the emergency lighting means.

The emergency lighting device can comprise an AC input, for receiving an AC mains voltage, e.g. 230 V and can be configured to detect an emergency situation if the AC mains voltage fails. The emergency lighting device can further comprise or be connected to an electrical energy storage, e.g. a battery, for providing an energy supply to the emergency lighting means during such an emergency situation.

The emergency lighting means can be an emergency luminaire, in particular an emergency light or an illuminated escape sign. The emergency lighting means can comprise an LED (light emitting diode) light source, e.g. an LED module or an LED track. The emergency lighting means can further comprise a sensor, e.g. a motion, a smoke or a light sensor, a control unit or a user interface, e.g. a dimmer or a touchscreen.

The output terminals can be connection pins on the housing of the emergency lighting device for electrically connecting the emergency lighting means.

The test switch can be a pushbutton or a rocker switch. In particular, the port and/or the controller are configured to register for how long or how often the switch is manually activated, e.g. pressed or closed, by a user.

The port can comprise two pins for connecting the test switch. In particular, the test switch can be configured to short the two pins if the test switch is closed.

The controller can be configured to discriminate operation events at the port in order to determine if they relate to test start signal data or other data, and to further demodulate the data, in particular the other, non-test start related data. For example, the controller can be a microcontroller or an ASIC of the emergency lighting device.

In an embodiment, the port is configured to output communication signals, in particular status signals or black box data.

This achieves the advantage that the port can be used to export data, e.g. to an external device. In particular, a two-way communication with the emergency lighting device can be established via the port.

In particular, the term black box data refers to data comprising parameters, e.g. operating parameters, measurement values, or sensor readings, which were collected by the emergency lighting means over a period of time and which can be stored in an internal memory of the emergency lighting means.

Preferably, an external device can be connected to the port for forwarding non-test start related communication signals to the emergency lighting device and/or for receiving communication signals from the emergency lighting device. The external device is for instance, a laptop, a smartphone, or another dedicated communication device.

Alternatively, a visual status indicator, e.g. an LED, can be connected to the port. The output communication signal can be encoded in a signaling characteristic of the visual status indicator, e.g. a flash rate of the visual status indicator. This encoding is, for instance, performed by the controller. Preferably, the output signal can be read out by an external device, e.g. a smartphone with a dedicated App, which is detecting and decoding the signaling characteristic of the visual status indicator.

In an embodiment, the non-test start related communication signals received at the port comprise setting data, wherein the controller is configured to adjust an operation parameter of the emergency lighting device and/or the emergency lighting means based on the setting data.

This achieves the advantage that settings of the emergency lighting device and/or the emergency lighting means can be adapted via the port.

In an embodiment, the controller is configured to set the emergency lighting device to a maintained mode or a non-maintained mode and/or to set an operation time of the emergency lighting device, in particular an operation time upon a mains failure, based on the setting data.

This achieves the advantage that operation parameters, such as operation mode or operation time of the emergency lighting device can be set via the port.

For example, in non-maintained mode the emergency lighting device only drives the emergency lighting means to light up if a mains power fails, while in maintained mode the emergency lighting device is configured to drive the emergency lighting means to light up continuously.

In an embodiment, the non-test start related communication signals received at the port comprise programming data, wherein the controller is configured to program or reprogram the emergency lighting device and/or the emergency lighting means based on the programming data.

This achieves the advantage that the emergency lighting device and/or the emergency lighting means can be programmed via the port.

The non-test start related communication signals received at the port comprise the commissioning data, wherein the controller is configured to commission the emergency lighting device and/or the emergency lighting means based on the commissioning data.

This achieves the advantage that the emergency lighting device and/or the emergency lighting means can be commissioned via the port.

In particular, commissioning may refer to assigning the emergency lighting device and/or the emergency lighting means to a group of likewise devices or means and/or to a location in the environment, e.g. a room.

In an embodiment, the emergency lighting device is configured to initiate a test routine of the emergency lighting device and/or the emergency lighting means upon receiving the test start signal.

Preferably, during the test routine various functions of the emergency lighting device and/or the emergency lighting means that are to be executed during an emergency situation can be tested, e.g. providing a power supply to the lighting means via a battery, activating the lighting means etc..

In particular, predefined operation patterns of the test switch can comprise time durations and/or repetition criteria, e.g. pressing the test switch for a predefined duration or a predefined number of times. The controller can be configured to process these operation patterns to determine if they relate to input data and, if yes, to demodulate the input data.

This achieves the advantage that also non-test start related signals, e.g. signals comprising settings or operation parameters, can be transferred or entered on the emergency lighting device by means of the test switch. Thus, no external device is required for transiting these signals, which further reduces device complexity and leads to cost savings.

According to a second aspect, the present disclosure relates to a system comprising an emergency lighting means, a test switch and an emergency lighting device according to the first aspect of the present disclosure.

The system can be an emergency lighting system for an environment such as a building.

According to a third aspect, the present disclosure relates to a method for operating an emergency lighting device supplying an emergency lighting means, wherein the emergency lighting device comprises a port configured to receive selective test start signals from a test switch connectable to the port and further configured to receive non-test start related communication signals from the test switch, wherein the emergency lighting device further comprises a controller configured to discriminate the communication signals received at the port in order to correspondingly process the received data as test start signal data or non-test start related communication signal data, the method comprising the steps of:
- receiving the selective test start signals from the test switch or the non-test start related communication signals from the test switch at the port; and
- discriminating the communication signals received at the port in order to correspondingly process the received data as the test start signal data or other data.

This achieves the advantage that the emergency lighting device can receive different types of signals via its test switch port. Thus, the complexity of the device can be reduced.

Preferably, the emergency lighting means comprises a controller, e.g. a microcontroller or ASIC, which is configured to discriminate the communication signal and/or process the received data.

In an embodiment, the method further comprises the step:
- outputting communication signals, in particular status signals or black box data, from the port.

This achieves the advantage that the port can be used to export data, e.g. to an external device. In particular, a two-way communication with the emergency lighting device can be established via the port.

In an embodiment, the non-test start related communication signals received at the port comprise setting data, wherein the method comprises:
- adjusting an operation parameter of the emergency lighting device and/or the emergency lighting means based on the setting data.

This achieves the advantage that settings of the emergency lighting device and/or the emergency lighting means can be adapted via the port.

In an embodiment, the non-test start related communication signals received at the port comprise programming data, wherein the method comprises:
- programming or reprogramming the emergency lighting device and/or the emergency lighting means based on the programming data.

This achieves the advantage that the emergency lighting device and/or the emergency lighting means can be programmed via the port.

The non-test start related communication signals received at the port comprise the commissioning data, wherein the method comprises:
- commissioning the emergency lighting device and/or the emergency lighting means based on the commissioning data.

This achieves the advantage that the emergency lighting device and/or the emergency lighting means can be commissioned via the port.

In particular, the steps of adjusting the operation parameter, programming, reprogramming, or commissioning can all be carried out by the controller of the emergency lighting device.

In an embodiment, the emergency lighting device is configured to initiate a test routine of the emergency lighting device and/or the emergency lighting means upon receiving the test start signal.

The above description with regard to the emergency lighting device according to the first aspect of the present disclosure is correspondingly valid for the method according to the third aspect of the present disclosure.

### BRIEF DESCRIPTION OF THE DRAWINGS

The invention will be explained in the followings together with the figures.
- Fig. 1: shows a block diagram of an emergency lighting device according to an embodiment;
- Fig. 2: shows a block diagram of an emergency lighting device according to an embodiment;
- Fig. 3: shows a schematic diagram of a method for operating an emergency lighting device according to an embodiment; and
- Fig. 4: shows a schematic diagram of a method for programming and/or commissioning an emergency lighting device according to an embodiment.

### DETAILED DESCRIPTION OF THE PREFERRED EMBODIMENTS

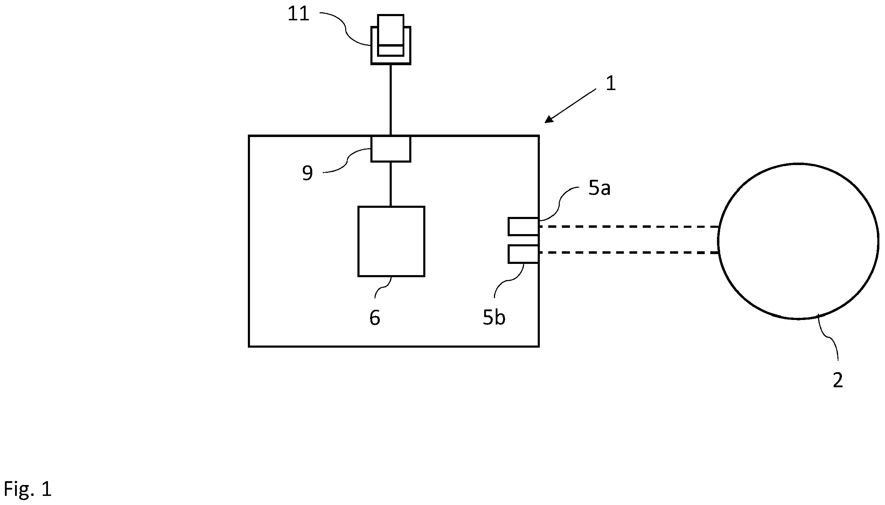

Fig. 1 shows an emergency lighting device 1 according to an embodiment.

The emergency lighting device 1 comprises output terminals 5a, 5b for electrically supplying an emergency lighting means 2; a port 9 for receiving communication signals, wherein a test switch 11 is connectable to the port 9, wherein the port 9 is configured to receive selective test start signals from the test switch 11 and is further configured to receive non-test start related communication signals from the test switch 11. The emergency lighting device 1 further comprises a controller 6 configured to discriminate the communication signals received at the port 9 in order to correspondingly process the received data as test start signal data or other data.

The emergency lighting device 1 can be a driver or other control gear of the emergency lighting means 2.

The emergency lighting means 2 can be an emergency luminaire, in particular an emergency light or an illuminated escape sign. The emergency lighting means 2 can comprise an LED light source, e.g. an LED module or an LED track, a sensor, e.g. a motion, a smoke or a light sensor, a control unit or a user interface, e.g. a dimmer or a touchscreen.

The output terminals 5a, 5b can be connection pins on the housing of the emergency lighting device 1 for electrically connecting the emergency lighting means 2.

The test switch 11 can be a pushbutton as shown in Fig. 1. When connected to the port 9, the test switch 11 can be arranged directly on a housing of the emergency lighting device 1. Alternatively, the test switch 11 can be connected to the port 9 via a wire.

The controller 6 can be connected to the port 9 and can be designed to process a signal coming from the port 9 either as a test start signal, i.e. a start signal for a test program / test routine, or as other (input) data. The controller 6 can further be configured to demodulate the non-test start related data. For example, the controller 6 is an ASIC or a microcontroller.

The emergency lighting device 1, in particular the controller 6, can be configured to initiate a test routine of the device 1 or the connected emergency lighting means 2 upon receipt of the test start signal.

Preferably, the port 9 is configured to receive the non-test start related communication signals from the test switch 11. To forward non-test start related communication signals to the emergency lighting device 1 with the test switch 11, the test switch 11 can be activated according to a predefined operation pattern, which differs from a pattern of a test start signal. For instance, the predefined operation pattern can be defined by time durations and/or by repetition criteria, e.g. pressing the switch 11 for a certain time interval or a certain number of times. The port 9 can be configured to receive a communication signal from the test switch 11, which comprises this predefined pattern, and the controller 6 can be configured to process, in particular interpret and/or demodulate, such a signal to generate input data.

In particular, the port 9 can be configured to receive the non-test start related communication signals from the test switch 11 following a power up of the emergency lighting device 1.

In an optional implementation, the port 9 is configured to output communication signals. The outputted communication signals can comprise status signals or black box data of the emergency lighting device 1. In particular, the controller 6 is configured to control the port 9 to output the communication signals. The communication signals can be outputted to an external device connected to the port 9. In this, a two-way communication can be established via the port 9.

The non-test start related communication signals received at the port 9 may comprise various types of input data, such as: setting data for setting a mode or operation parameter of the device 1, programming data, or commissioning data.

The controller 6 can be configured to demodulate and/or process this data. In particular, the controller 6 can be configured to adjust an operation parameter of the emergency lighting device 1 and/or the emergency lighting means 2 based on the input data. Adjusting an operation parameter can comprise selecting a maintained or non-maintained mode of the device 1, or setting an operation time of the device 1 upon a mains failure. The operation time can, for instance, be set to 1 or 3 hours depending on the requirements.

The controller 6 can further be configured to program, reprogram or commission the emergency lighting device 1 and/or the emergency lighting means 2 based on the input data.

The emergency lighting device 1 may comprise a memory for storing the adjusted setting, programming and/or commissioning data.

Optionally, the emergency lighting device 1 comprises a visual status indicator (not shown). The visual status indicator can be configured to signal the starting of the test routine or the receipt of non-test start related data, e.g. by changing to another color and/or flashing with a certain frequency. In an optional implementation, the visual status indicator is connected to the port 9.

Preferably, an emergency lighting system comprises the emergency lighting device 1, the emergency lighting means 2 and the test switch 11.

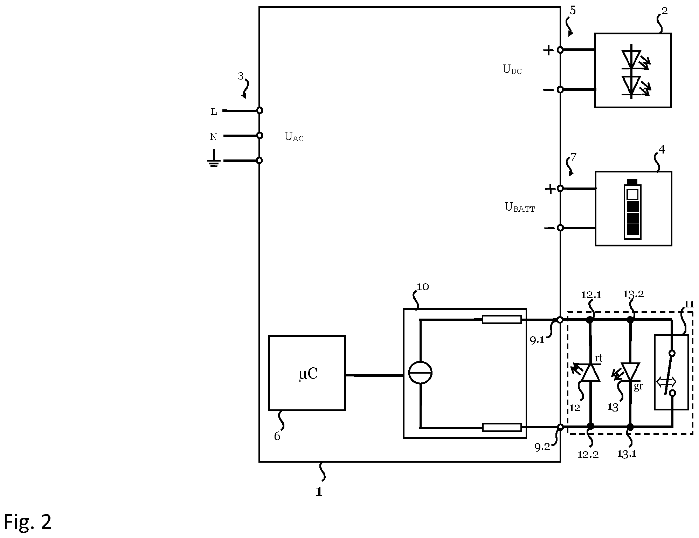

Fig. 2 shows a block diagram of the emergency lighting device 1 according to another embodiment.

The emergency lighting device 1 shown in Fig. 2 is a driver which supplies the emergency lighting means 2, in particular an LED module, with a DC output voltage U_{DC}. The LED module is connected to the output terminals 5 of the emergency lighting device 1. The LED module can include LEDs for an emergency lighting operation. The port of the emergency lighting device can be formed by a first connection 9.1 and a second connection 9.1. The test switch 11 can be connected between the these connections 9.1, 9.2 in such a way, that the test switch 11 shorts the connections 9.1, 9.2 if it is closed. For example, the test switch 11 is a rocker switch.

The emergency lighting device 1 shown in Fig. 2 further comprises a first LED 12 and a second LED 13, wherein first and second LED 13 are connected in opposite directions in parallel between the first and the second connection 9.1, 9.2. Each of the LEDs 12, 13 comprises two connectors 12.1, 12.2 and 13.1, 13.2 forming anode and cathode, respectively.

In the exemplary embodiment of Fig. 2, the emergency lighting device 1 further comprises a constant power source 10, which is configured to generate a constant current with a first or second polarity between the first and second connection 9.1, 9.2. Depending on the polarity of the constant current, either the first LED 12 or the second LED 13 is illuminated. The LEDs 12, 13 can form status LEDs of the device 1. For instance, the first LED 12 is red and the second LED 13 is green. Connecting both LEDs 12, 13 and the test switch 11 to the same port has the advantage that the overall complexity of the device 1 is reduced.

In particular, the LEDs 12, 13 connected to the port connections 9.1, 9.2 can be used to output communication signals by encoding such signals in a signaling characteristic of the LEDs 12, 13, e.g. a flash rate of the LEDs 12, 13.

The controller 6, in particular a microcontroller, can be configured to detect a short-circuit between the first and the second connection 9.1, 9.2 of the port, for instance by detecting if for a certain constant current, a voltage between the connections 9.1, 9.2 falls below a certain threshold. In this way, the controller 6 can detect if the test switch 11 is opened or closed.

In particular, to set the emergency lighting device 1 to maintained or non-maintained mode, the test switch 11 can be replaced by a removable jumper link. However, such a jumper link is not needed if the device 1 is set to maintained or non-maintained mode by activating the test switch 11 according to predefined operation patterns as disclosed above.

The emergency lighting device 1 can further comprise a battery connection 7 to which an accumulator 4 or battery is connected. The accumulator 4 can be electrically charged by the device 1 via the battery connection 7. In an emergency situation (e.g. failure of the mains voltage U_{AC}), the device 1 can supply the connector 5 and, thus, the LED module 2 with electrical energy from the accumulator 4, e.g. for an operation time of 1 or 3 hours. The operation time can be preset by a communication signal received via the port 9.

The emergency lighting device 1 can be set to non-maintained mode, where the emergency lighting device 1 only drives the emergency lighting means 2 to light up if a mains power fails, or to maintained mode, where the emergency lighting device 1 is configured to drive the emergency lighting means 2 to light up continuously.

The emergency lighting device 1 can comprise a further connector 3 for connecting it to the mains.

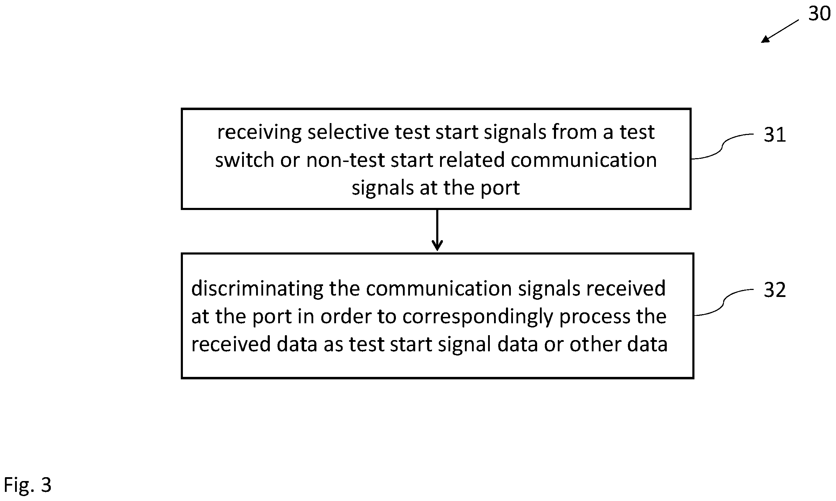

Fig. 3 shows a schematic diagram of a method 30 for operating the emergency lighting device 1 according to an embodiment.

The method 30 comprises the steps of:
- receiving 31 selective test start signals from the test switch 11 or non-test start related communication signals from the test switch 11 at the port 9; and
- discriminating 32 the communication signals received at the port 9 in order to correspondingly process the received data as test start signal data or other data.

The emergency lighting device 1 can be configured to initiate the test routine of the emergency lighting device 1 and/or the emergency lighting means 2 upon receiving the test start signal.

Preferably, method 30 further comprises the step of: outputting communication signals, in particular status signals or black box data, from the port 9.

The non-test start related communication signals received at the port 9 may comprise setting data. In this case, the method can comprise the following further step:
- adjusting an operation parameter of the emergency lighting device 1 and/or the emergency lighting means 2 based on the setting data.

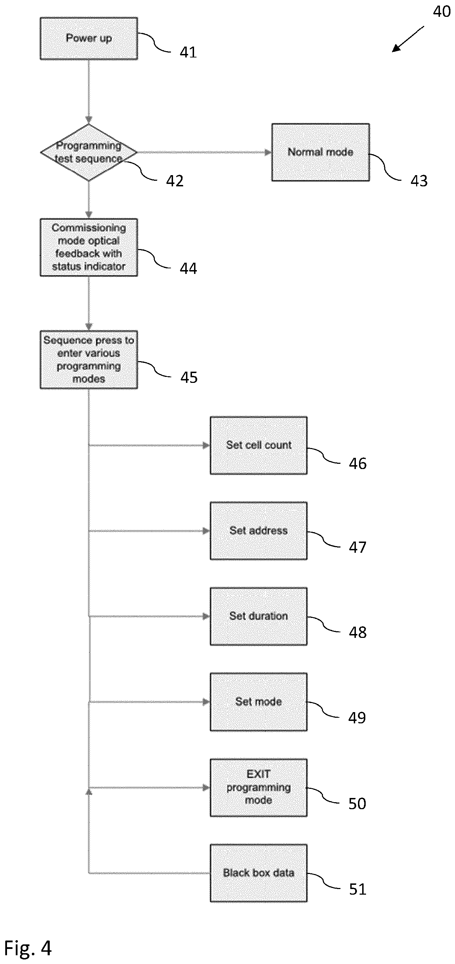

Fig. 4 shows a schematic diagram of a method 40 for programming and/or commissioning an emergency lighting device 1 according to an embodiment. In particular, the method 30 for operating the emergency lighting device, as for example shown in Fig. 3, comprises the method 40 or individual steps of the method 40 shown in Fig. 4.

Preferably, the method 40 is performed if the non-test start related communication signals received at the port 9 comprise programming data and/or commissioning data.

The method 40 comprises: powering-up 41 the emergency lighting device 1, and programming 42 a test sequence. The test sequence can be programmed by activating the test switch 11 according to an operation pattern either to activate 43 a normal operating mode of the device 1, or to activate 44 a commissioning mode of the device 1. Preferably, the commissioning mode is activated if the switch 11 is activated according a predefined operation patter. The predefined operation pattern can comprise a defined sequence, e.g. a long press followed by a number of short presses on the test switch 1. Furthermore, the emergency lighting device 1 may comprise a visual status indicator, e.g. an LED, with gives an optical feedback upon entering the commissioning mode.

Following activating 44 the commission mode, the method 40 can further comprise entering 45 further programming modes by activating the test switch 11 according to further operation patterns, e.g. defined by pressing the switch 11 according to predefined sequences.

The further programming modes can comprise modes for: setting 46 a cell count, setting 47 an address, in particular of the emergency lighting device 1 or the lighting means 2, setting 48 a duration, in particular an operation duration of the emergency lighting device or the lighting means 2, setting 49 a mode of the emergency lighting device 1, setting 50 and EXIT programming mode of the emergency lighting device 1, or transmitting 51 black box data.

The visual status indicator can be configured to optically feedback the set mode, for instance by red or green flashes. In addition, data, such as black box data, of the emergency lighting device 1 can be read out by reading status indicator flash rates, e.g. via a mobile phone app.

While various embodiments of the present invention have been described above, it should be understood that they have been presented by way of example only and not limitation. Numerous changes to the disclosed embodiments can be made in accordance with the disclosure herein without departing from the scope of the invention. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings.

## Claims

1. Emergency lighting device (1), comprising:
output terminals (5a, 5b) for electrically supplying an emergency lighting means (2);
a port (9) for receiving communication signals, wherein a test switch (11) is connectable to the port (9);
wherein the port (9) is configured to receive selective test start signals from the test switch (11) and wherein the port (9) is further configured to receive non-test start related communication signals from the test switch (11); and
a controller (6) configured to discriminate the communication signals received at the port (9) in order to correspondingly process the received data as test start signal data or non-test start related communication signal data;
the emergency lighting device (1) being
**characterized in that**
the non-test start related communication signals received at the port (9) comprise commissioning data; and
the controller (6) is configured to commission the emergency lighting device (1) and/or the emergency lighting means (2) based on the commissioning data.

2. Emergency lighting device (1) according to claim 1, wherein the port (9) is configured to output communication signals, in particular status signals or black box data.

3. Emergency lighting device (1) according to claim 1 or 2, wherein the non-test start related communication signals received at the port (9) comprise setting data, wherein the controller (6) is configured to adjust an operation parameter of the emergency lighting device (1) and/or the emergency lighting means (2) based on the setting data.

4. Emergency lighting device (1) according to claim 3, wherein the controller (6) is configured to set the emergency lighting device (1) to a maintained mode or a non-maintained mode and/or to set an operation time of the emergency lighting device (1), in particular an operation time upon a mains failure, based on the setting data.

5. Emergency lighting device (1) according to any one of the preceding claims, wherein the non-test start related communication signals received at the port (9) comprise programming data, wherein the controller (6) is configured to program or reprogram the emergency lighting device (1) and/or the emergency lighting means (2) based on the programming data.

6. Emergency lighting device (1) according to any one of the preceding claims, wherein the emergency lighting device (1) is configured to initiate a test routine of the emergency lighting device (1) and/or the emergency lighting means (2) upon receiving the test start signal.

7. System comprising an emergency lighting means (2), a test switch (11) and an emergency lighting device (1) according to any one of the preceding claims.

8. Method (30) for operating an emergency lighting device (1) supplying an emergency lighting means (2), wherein the emergency lighting device (1) comprises a port (9) for receiving communication signals, wherein the port (9) is configured to receive selective test start signals from a test switch (11) connectable to the port (9) and further configured to receive non-test start related communication signals from the test switch (11), wherein the emergency lighting device (1) further comprises a controller (6) configured to discriminate the communication signals received at the port (9) in order to correspondingly process the received data as test start signal data or non-test start related communication signal data, the method (30) comprising the steps of:
• receiving (31) the selective test start signals or the non-test start related communication signals from the test switch (11) at the port (9);
• discriminating (32) the communication signals received at the port (9) in order to correspondingly process the received data as the test start signal data or the other data; and
the method being **characterized in that**
the non-test start related communication signals received at the port (9) comprise commissioning data; and the method (30) further comprises:
• commissioning the emergency lighting device (1) and/or the emergency lighting means (2) based on the commissioning data.

9. Method (30) according to claim 8, further comprising the step:
• outputting communication signals, in particular status signals or black box data, from the port (9).

10. Method (30) according to claim 8 or 9, wherein the non-test start related communication signals received at the port (9) comprise setting data, wherein the method (30) further comprises the step:
• adjusting an operation parameter of the emergency lighting device (1) and/or the emergency lighting means (2) based on the setting data.

11. Method (30) according to any one of claims 8 to 10, wherein the non-test start related communication signals received at the port (9) comprise programming data, wherein the method (30) further comprises the step:
• programming or reprogramming the emergency lighting device (1) and/or the emergency lighting means (2) based on the programming data.

12. Method (30) according to any one of claims 8 to 11, wherein the emergency lighting device (1) is configured to initiate a test routine of the emergency lighting device (1) and/or the emergency lighting means (2) upon receiving the test start signal.

## Patentansprüche

1. Notbeleuchtungsvorrichtung (1), umfassend:
Ausgangsklemmen (5a, 5b) zum elektrischen Versorgen eines Notbeleuchtungsmittels (2);
einen Anschluss (9) zum Empfangen von Kommunikationssignalen, wobei ein Testschalter (11) mit dem Anschluss (9) verbindbar ist;
wobei der Anschluss (9) konfiguriert ist, um selektive Teststartsignale von dem Testschalter (11) zu empfangen, und wobei der Anschluss (9) ferner konfiguriert ist, um nichtteststartbezogene Kommunikationssignale von dem Testschalter (11) zu empfangen; und
eine Steuerung (6), die konfiguriert ist, um die Kommunikationssignale, die an dem Anschluss (9) empfangen werden, zu unterscheiden, um die empfangenen Daten als Teststartsignaldaten oder nichtteststartbezogene Kommunikationssignaldaten entsprechend zu verarbeiten; wobei die Notbeleuchtungsvorrichtung (1) **dadurch gekennzeichnet ist, dass**
die nichtteststartbezogenen Kommunikationssignale, die an dem Anschluss (9) empfangen werden, Inbetriebnahmedaten umfassen; und
die Steuerung (6) konfiguriert ist, um die Notbeleuchtungsvorrichtung (1) und/oder das Notbeleuchtungsmittel (2) basierend auf den Inbetriebnahmedaten in Betrieb zu nehmen.

2. Notbeleuchtungsvorrichtung (1) nach Anspruch 1, wobei der Anschluss (9) konfiguriert ist, um Kommunikationssignale, insbesondere Statussignalen oder Blackbox-Daten, auszugeben.

3. Notbeleuchtungsvorrichtung (1) nach Anspruch 1 oder 2, wobei die nichtteststartbezogenen Kommunikationssignale, die an dem Anschluss (9) empfangen werden, Einstellungsdaten umfassen, wobei die Steuerung (6) konfiguriert ist, um einen Betriebsparameter der Notbeleuchtungsvorrichtung (1) und/oder des Notbeleuchtungsmittel (2) basierend auf den Einstellungsdaten anzupassen.

4. Notbeleuchtungsvorrichtung (1) nach Anspruch 3, wobei die Steuerung (6) konfiguriert ist, um die Notbeleuchtungsvorrichtung (1) auf einen Dauerschaltungsmodus oder einen Bereitschaftsschaltungsmodus einzustellen und/oder eine Betriebszeit der Notbeleuchtungsvorrichtung (1), insbesondere eine Betriebszeit bei einem Netzausfall, basierend auf den Einstelldaten einzustellen.

5. Notbeleuchtungsvorrichtung (1) nach einem der vorstehenden Ansprüche, wobei die nichtteststartbezogenen Kommunikationssignale, die an dem Anschluss (9) empfangen werden, Programmierdaten umfassen, wobei die Steuerung (6) konfiguriert ist, um die Notbeleuchtungsvorrichtung (1) und/oder das Notbeleuchtungsmittel (2) basierend auf den Programmierdaten zu programmieren oder neu zu programmieren.

6. Notbeleuchtungsvorrichtung (1) nach einem der vorstehenden Ansprüche, wobei die Notbeleuchtungsvorrichtung (1) konfiguriert ist, um bei dem Empfangen des Teststartsignals eine Testroutine der Notbeleuchtungsvorrichtung (1) und/oder des Notbeleuchtungsmittels (2) zu initiieren.

7. System, umfassend ein Notbeleuchtungsmittel (2), einen Testschalter (11) und eine Notbeleuchtungsvorrichtung (1) nach einem der vorstehenden Ansprüche.

8. Verfahren (30) zum Betreiben einer Notbeleuchtungsvorrichtung (1), die ein Notbeleuchtungsmittel (2) versorgt, wobei die Notbeleuchtungsvorrichtung (1) einen Anschluss (9) zum Empfangen von Kommunikationssignalen umfasst, wobei der Anschluss (9) konfiguriert ist, um selektive Teststartsignale von einem Testschalter (11), der mit dem Anschluss (9) verbindbar ist, zu empfangen, und ferner konfiguriert ist, um nichtteststartbezogene Kommunikationssignale von dem Testschalter (11) zu empfangen, wobei die Notbeleuchtungsvorrichtung (1) ferner eine Steuerung (6) umfasst, die konfiguriert ist, um Kommunikationssignale, die an dem Anschluss (9) empfangen werden, zu unterscheiden, um die empfangenen Daten als Teststartsignaldaten oder nichtteststartbezogene Kommunikationssignaldaten entsprechend zu verarbeiten, das Verfahren (30) umfassend die Schritte:
• Empfangen (31) der selektiven Teststartsignale oder der nichtteststartbezogenen Kommunikationssignale von dem Testschalter (11) an dem Anschluss (9);
• Unterscheiden (32) der Kommunikationssignale, die an dem Anschluss (9) empfangen werden, um die empfangenen Daten als die Teststartsignaldaten oder die anderen Daten entsprechend zu verarbeiten; und
das Verfahren **dadurch gekennzeichnet ist, dass**
die nichtteststartbezogenen Kommunikationssignale, die an dem Anschluss (9) empfangen werden, Inbetriebnahmedaten umfassen; und das Verfahren (30) ferner umfasst:
• Inbetriebnehmen der Notbeleuchtungsvorrichtung (1) und/oder des Notbeleuchtungsmittels (2) basierend auf den Inbetriebnahmedaten.

9. Verfahren (30) nach Anspruch 8, ferner umfassend den Schritt:
• Ausgeben von Kommunikationssignalen, insbesondere Statussignalen oder Blackbox-Daten, von dem Anschluss (9).

10. Verfahren (30) nach Anspruch 8 oder 9, wobei die nichtteststartbezogenen Kommunikationssignale, die an dem Anschluss (9) empfangen werden, Einstellungsdaten umfassen, wobei das Verfahren (30) ferner den Schritt umfasst:
• Anpassen eines Betriebsparameters der Notbeleuchtungsvorrichtung (1) und/oder des Notbeleuchtungsmittels (2) basierend auf den Einstellungsdaten.

11. Verfahren (30) nach einem der Ansprüche 8 bis 10, wobei die nichtteststartbezogenen Kommunikationssignale, die an dem Anschluss (9) empfangen werden, Programmierdaten umfassen, wobei das Verfahren (30) ferner den Schritt umfasst:
• Programmieren oder Neuprogrammieren der Notbeleuchtungsvorrichtung (1) und/oder des Notbeleuchtungsmittels (2) basierend auf den Programmierdaten.

12. Verfahren (30) nach einem der Ansprüche 8 bis 11, wobei die Notbeleuchtungsvorrichtung (1) konfiguriert ist, um bei dem Empfangen des Teststartsignals eine Testroutine der Notbeleuchtungsvorrichtung (1) und/oder des Notbeleuchtungsmittels (2) zu initiieren.

## Revendications

1. Dispositif d'éclairage d'urgence (1), comprenant :
des bornes de sortie (5a, 5b) destinées à alimenter électriquement un moyen d'éclairage d'urgence (2) ;
un port (9) destiné à recevoir des signaux de communication, dans lequel un commutateur de test (11) peut être connecté au port (9) ;
dans lequel le port (9) est configuré pour recevoir des signaux de début de test sélectifs du commutateur de test (11) et dans lequel le port (9) est en outre configuré pour recevoir des signaux de communication non liés au début de test du commutateur de test (11) ; et
un dispositif de commande (6) configuré pour distinguer les signaux de communication reçus au niveau du port (9) afin de traiter en conséquence les données reçues comme des données de signal de début de test ou des données de signal de communication non liées au début de test ; le dispositif d'éclairage d'urgence (1) est **caractérisé en ce que**
les signaux de communication non liés au début de test reçus au niveau du port (9) comprennent des données de mise en service ; et
le dispositif de commande (6) est configuré pour mettre en service le dispositif d'éclairage d'urgence (1) et/ou le moyen d'éclairage d'urgence (2) sur la base des données de mise en service.

2. Dispositif d'éclairage d'urgence (1) selon la revendication 1, dans lequel le port (9) est configuré pour émettre des signaux de communication, en particulier des signaux d'état ou des données de boîte noire.

3. Dispositif d'éclairage d'urgence (1) selon la revendication 1 ou 2, dans lequel les signaux de communication non liés au début de test reçus au niveau du port (9) comprennent des données de réglage, dans lequel le dispositif de commande (6) est configuré pour ajuster un paramètre de fonctionnement du dispositif d'éclairage d'urgence (1) et/ou du moyen d'éclairage d'urgence (2) sur la base des données de réglage.

4. Dispositif d'éclairage d'urgence (1) selon la revendication 3, dans lequel le dispositif de commande (6) est configuré pour régler le dispositif d'éclairage d'urgence (1) sur un mode maintenu ou un mode non maintenu et/ou pour régler une durée de fonctionnement du dispositif d'éclairage d'urgence (1), en particulier une durée de fonctionnement en cas de panne de courant, sur la base des données de réglage.

5. Dispositif d'éclairage d'urgence (1) selon l'une quelconque des revendications précédentes, dans lequel les signaux de communication non liés au début de test reçus au niveau du port (9) comprennent des données de programmation, dans lequel le dispositif de commande (6) est configuré pour programmer ou reprogrammer le dispositif d'éclairage d'urgence (1) et/ou le moyen d'éclairage d'urgence (2) sur la base des données de programmation.

6. Dispositif d'éclairage d'urgence (1) selon l'une quelconque des revendications précédentes, dans lequel le dispositif d'éclairage d'urgence (1) est configuré pour lancer une routine de test du dispositif d'éclairage d'urgence (1) et/ou du moyen d'éclairage d'urgence (2) à la réception du signal de début de test.

7. Système comprenant un moyen d'éclairage d'urgence (2), un commutateur de test (11) et un dispositif d'éclairage d'urgence (1) selon l'une quelconque des revendications précédentes.

8. Procédé (30) destiné à faire fonctionner un dispositif d'éclairage d'urgence (1) alimentant un moyen d'éclairage d'urgence (2), dans lequel le dispositif d'éclairage d'urgence (1) comprend un port (9) destiné à recevoir des signaux de communication, dans lequel le port (9) est configuré pour recevoir des signaux sélectifs de début de test d'un commutateur de test (11) pouvant être connecté au port (9) et configuré en outre pour recevoir des signaux de communication non liés au début de test du commutateur de test (11), dans lequel le dispositif d'éclairage d'urgence (1) comprend en outre un dispositif de commande (6) configuré pour distinguer les signaux de communication reçus au niveau du port (9) afin de traiter les données reçues comme des données de signal de début de test ou des données de signal de communication non liées au début de test, le procédé (30) comprenant les étapes consistant à :
• recevoir (31) les signaux de début de test sélectifs ou les signaux de communication non liés au début de test du commutateur de test (11) au niveau du port (9) ;
• distinguer (32) les signaux de communication reçus au niveau du port (9) afin de traiter en conséquence les données reçues comme données du signal de début de test ou autres données ; et
le procédé étant **caractérisé en ce que**
les signaux de communication non liés au début de test reçus au niveau du port (9) comprennent des données de mise en service ; et le procédé (30) comprend en outre :
• la mise en service du dispositif d'éclairage d'urgence (1) et/ou le moyen d'éclairage d'urgence (2) sur la base des données de mise en service.

9. Procédé (30) selon la revendication 8, comprenant en outre l'étape consistant à :
• émettre des signaux de communication, en particulier des signaux d'état ou des données de boîte noire, à partir du port (9).

10. Procédé (30) selon la revendication 8 ou 9, dans lequel les signaux de communication non liés au début de test reçus au niveau du port (9) comprennent des données de réglage, dans lequel le procédé (30) comprend en outre l'étape consistant à :
• ajuster un paramètre de fonctionnement du dispositif d'éclairage d'urgence (1) et/ou du moyen d'éclairage d'urgence (2) sur la base des données de réglage.

11. Procédé (30) selon l'une quelconque des revendications 8 à 10, dans lequel les signaux de communication non liés au début de test reçus au niveau du port (9) comprennent des données de programmation, dans lequel le procédé (30) comprend en outre l'étape consistant à :
• programmer ou reprogrammer le dispositif d'éclairage d'urgence (1) et/ou le moyen d'éclairage d'urgence (2) sur la base des données de programmation.

12. Procédé (30) selon l'une quelconque des revendications 8 à 11, dans lequel le dispositif d'éclairage d'urgence (1) est configuré pour lancer une routine de test du dispositif d'éclairage d'urgence (1) et/ou des moyens d'éclairage d'urgence (2) à la réception du signal de début de test.
